# EUROPÄISCHE PATENTSCHRIFT

(11) **EP 3 164 858 B1**
(45) Veröffentlichungstag und Bekanntmachung des Hinweises auf die Patenterteilung: **09.08.2023**
(21) Anmeldenummer: 15727404.4
(22) Anmeldetag: 08.06.2015
(51) Int. Cl.: G08G 1/14, G08G 1/0962, G01C 21/36

(54) **VERFAHREN ZUR PARKPLATZVERMITTLUNG UND FREIER-PARKPLATZ-ASSISTENZSYSTEM**
METHOD FOR DETERMINING PARKING SPACES AND FREE-PARKING SPACE ASSISTANCE SYSTEM
PROCÉDÉ DE COMMUNICATION DE PLACES DE STATIONNEMENT ET SYSTÈME D'AIDE AU STATIONNEMENT LIBRE

(30) Priorität: 02.07.2014 DE 102014212843
(43) Veröffentlichungstag der Anmeldung: 10.05.2017
(73) Patentinhaber: Robert Bosch GmbH, 70442 Stuttgart (DE)
(72) Erfinder: IRION, Albrecht, 70563 Stuttgart (DE); MAIER, Manuel, 73732 Esslingen (DE)
(86) Internationale Anmeldenummer: PCT/EP2015/062636
(87) Internationale Veröffentlichungsnummer: WO 2016/000908

(56) Entgegenhaltungen:
- EP-A1- 2 724 911
- CN-A- 103 632 572
- DE-A1-102009 021 014
- DE-A1-102012 216 994
- US-A1- 2014 176 348

## Beschreibung

### Stand der Technik

Die Erfindung betrifft ein Verfahren zur Parkplatzvermittlung.

Gegenstand der Erfindung sind auch ein Computerprogramm und ein Freier-Parkplatz-Assistenzsystem, welche insbesondere zur Ausführung des Verfahrens geeignet sind.

Aus der DE 10 2009 028 024 A1 ist ein Parkleitsystem zur Navigation eines Parkplatz suchenden Fahrzeugs zu einem freien Parkplatz bekannt, wobei Informationen über verfügbare, freie Parkplätze durch im Verkehr befindliche Fahrzeuge ausgeforscht werden und die Informationen dem Parkplatz suchenden Fahrzeug übermittelt werden. Hierbei wird insbesondere das Problem des Parkens am Straßenrand und auf Parkplätzen adressiert. Die Fahrzeuge weisen zur Parkplatzerkennung optische und nicht-optische Sensoren und Navigationseinheiten auf. Die Ermittlung freier Parkplätze erfolgt entweder indem ein Fahrzeug seine Position und Fahrzeugdaten übermittelt, falls ein bis dahin selbst genutzter Parkplatz nicht mehr benötigt wird oder durch Vermessung von freien Flächen durch Auswertung von Videosignalen und arithmetischer Berechnung der Größe der Fläche. Die Informationen bezüglich freier Parkplätze werden einem zentralen Server übermittelt und auf diesem gespeichert.

Die Vorteile Cloud-basierter Parkplatzvermittlungssysteme sind aus dem Stand der Technik bekannt. Ein besonderer Vorteil des Cloud-Computing-Systems gegenüber der Realisierung als Server ist die Skalierbarkeit. Die Recheninstanzen können je nach Anforderung beliebig um weitere Instanzen erweitert oder verkleinert werden. Ein weiterer Vorteil des Cloud-Computing-Systems sind Kostenvorteile gegenüber konventionellen Systemen. Es lassen sich lokale Ressourcen, insbesondere Software und Hardware, einsparen und beispielsweise bei einer Bezahlung nach Dauer oder Nutzung der Ressourcen Kostenvorteile erreichen.

Die DE 10 2012 216 994 A1 beschreibt ein Cloud-basiertes System zur Parkplatzvermittlung, wobei einzelne Fahrzeuge mittels GPS die Position von Parkplätzen und mittels Umfeldsensoren Angaben zu Länge und Breite der Parkplätze gewinnen, hieraus freie Parkplätze erkennen und einem Server übermitteln. Auf dem Server werden die Informationen zusammen mit Metadaten gespeichert, beispielsweise zum Verkehr und zu Bedingungen, ob zum Beispiel ein Anwohnerparkplatz, Kurzzeitparkplatz, Behindertenparkplatz, Familienparkplatz usw. vorliegt.

Die CN 103 632 572 A beschreibt ein intelligentes Parksystem, bei dem in einem ersten Schritt verfügbare Parkplätze erfasst und an einen Cloud-Sever übertragen werden. Nachfolgend wird ein verfügbarer Zielparkplatz ausgewählt, wobei eine Reservierung des Parkplatzes über das Kennzeichen des Fahrzeugs erfolgt. Beim Einparken wird das Fahrzeug über sein Nummernschild identifiziert.

Die EP 2 724 911 A1 offenbart ein Fahrassistenzverfahren bei dem ein Zustand eines zu befahrenden Streckenabschnitts und Fahrspuren dieses Abschnitts erfasst werden und eine Fahrspurempfehlung für diesen Abschnitt abgegeben wird. Fahrzeuge können dabei beispielsweise Schilder erfassen und Daten an ein Cloud-System übertragen. Die Abgabe der Fahrspurempfehlung erfolgt z.B. über ein Head-Up-Display oder ein Navigationsgerät, wobei die Darstellung rein virtuell ausgebildet sein kann oder mit einem realen Bild kombiniert werden kann.

Die DE 10 2009 021 014 A1 beschreibt eine Vorrichtung zum Übertragen von Informationen über freien Parkraum und ein Führungssystem für freien Parkraum. Die Informationen werden dazu zwischen Fahrzeugen ausgetauscht. Durch ein Fahrzeug empfangene Informationen werden genutzt, um einem Insassen in dem empfangenden Fahrzeug eine Führung zu dem freien Parkraum bereitzustellen. Das empfangende Fahrzeug kann einen ausgewählten Parkraum reservieren. Eine Anzeigeeinheit kann dem Fahrer eine Führungsanzeige zum Führen des Fahrzeugs zu dem freien Parkraum zeigen.

Die US 2014/0176348 A1 beschreibt ein Verfahren zum Bereitstellen eines Parksystems, bei dem ein Parkplatz für einen Nutzer ausgewählt wird und auf einer Anzeigeeinrichtung dargestellt wird. Die Anzeigeeinrichtung kann z.B. ein Head-Up-Display sein oder eine außerhalb des Fahrzeugs angeordnete Anzeige sein.

### Offenbarung der Erfindung

Die Erfindung ist in den unabhängigen Ansprüchen definiert. Die abhängigen Ansprüche beschreiben vorteilhafte Ausführungen der Erfindung.

### Vorteile der Erfindung

Bei dem erfindungsgemäßen Verfahren zur Parkplatzvermittlung ist vorgesehen, dass Verkehrsteilnehmer Informationen über freie Parkplätze ermitteln und die Informationen an ein Cloud-Computing-System übermitteln, wobei das Cloud-Computing-System Informationen über die freien Parkplätze in eine Parkplatzkarte abrufbar aufnimmt. Dabei ist erfindungsgemäß vorgesehen, dass Parkplätze unabhängig von vorhandenen oder nicht vorhandenen Markierungen erkannt und an das Cloud-Computing-System übermittelt werden. Das Cloud-Computing- System ist eingerichtet, Informationen über den bereitgestellten Parkplatz an den Verkehrsteilnehmer zu übermitteln, so dass diese Informationen auf einem Anzeigegerät des Verkehrsteilnehmers visuell dargestellt werden. Der Verkehrsteilnehmer, beispielsweise der Fahrer eines Fahrzeugs, kann so die Informationen über den bereitgestellten Parkplatz, wie z.B. die genaue Position des Parkplatzes, erkennen, auch wenn Markierungen, wie etwa Begrenzungslinien auf dem Boden oder ähnliches, nicht vorhanden sind. Der zur Verfügung stehende Parkraum ist somit erfindungsgemäß im Cloud-Computing-System unabhängig von festgelegten Parkplatzbegrenzungen hinterlegt und kann daher flexibel, und beispielsweise abhängig von der Größe des anfragenden Fahrzeugs oder von besonderen Umständen, freigegeben werden.

Ein derartiges, auf Cloud-Computing basierendes Verfahren zur Parkplatzvermittlung hat den Vorteil, dass mittels einer Vielzahl von Sensorknoten eine große Menge von Daten in dem Cloud-Computing-System, welches im Rahmen der Erfindung auch kurz als eine Cloud bezeichnet sein kann, erfasst werden. Ein zentrales Element ist dabei die Vernetzung von Sensorinformationen aus einer Vielzahl von Fahrzeugen. Die große Menge an Daten wird über intelligente Data-Mining-Methoden ausgewertet und Unternehmen und/oder Endanwendern in einer aufbereiteten Form zur Verfügung gestellt. Durch die Zusammenführung in der Cloud ist die aktuelle Parkplatzlage idealerweise exakt ermittelbar.

Ein Vorteil ist, dass mittels der Cloud eine globale Karte über die aktuelle Parkplatzsituation gebildet werden kann. Dazu müssen erfindungsgemäß keine festgelegten, etwa durch Markierungen ausgewiesene, Einzelparkplätze im System abgebildet werden. Stattdessen ist vorgesehen, dass freie Flächen situationsabhängig als Parkflächen vom Cloud-Computing-System als Parkflächen eingestuft werden, und einem anfragenden Verkehrsteilnehmer, z.B. abhängig von dessen Platzbedarf, ein freier Parkplatz zugewiesen wird. Ein derartiger, nicht an Markierungen bzw. Begrenzungen der realen Welt gebundener Parkplatz wird in diesem Zusammenhang auch als "virtueller Parkplatz" bezeichnet. Damit der Verkehrsteilnehmer den bereitgestellten "virtuellen" Parkplatz auch bei fehlenden Markierungen zuverlässig anfahren kann, übermittelt das Cloud-Computing-System erfindungsgemäß entsprechende, den bereitgestellten Parkplatz charakterisierende Informationen, die auf einem Anzeigegerät des Verkehrsteilnehmers visuell dargestellt werden.

Das Anzeigegerät, auch als HMI (Human Machine Interface) bezeichnet kann nichterfindungsgemäss beispielsweise das Navigationsgerät, eine Smartphone-Applikation oder ein Headdown-Display sein, wobei die Information über freie und/oder belegte Parkplätze in der Umgebung eines bestimmten Orts, beispielsweise in der lokalen Umgebung des Fahrzeugs und/oder in einer Umgebung eines bekannten Navigationsziels angezeigt wird. Idealerweise werden die Informationen dem Nutzer so präsentiert, dass die Aktualität bzw. Verlässlichkeit der gelieferten Informationen ersichtlich werden, beispielsweise vor wie vielen Minuten die Parklücke von einem anderen Fahrzeug als frei erkannt wurde und/oder von wie vielen Fahrzeugen die Information gestützt wird. Dabei werden Informationen verschiedener Fahrzeuge bezüglich eines Parkplatzes miteinander verknüpft, beispielsweise die Kameraerkennung durch ein Fahrzeug und ein Status frei/belegt durch ein weiteres Fahrzeug.

Bei dem erfindungsgemässen Anzeigegerät handelt es sich um ein Head-Up-Display (HUD). Dies hat den Vorteil dass der Fahrer die Informationen über den Parkplatz visuell erfassen kann, ohne den Blick von der Straße nehmen zu müssen. Insbesondere ist das Head-Up-Display geeignet, virtuelle Objekte in den Sichtbereich des Verkehrsteilnehmers einzublenden. Somit können in einer weiter bevorzugten Ausführung der Erfindung Begrenzungslinien und/oder Parkplatzsymbole eingeblendet werden, die nach dem Prinzip der "Augmented Reality" (erweiterte Realität) die Wahrnehmung des Fahrers ergänzen, insbesondere derart, dass ein realistischer Eindruck von Parkplatzbegrenzungen entsteht.

Besonders vorteilhaft ist, wenn die Verkehrsteilnehmer mit Umgebungserfassungseinrichtungen und Kommunikationseinrichtungen ausgestattete Fahrzeuge sind, die bei einer Vorbeifahrt an freien Parkplätzen die freien Parkplätze ermitteln. Derartige Systeme, wie z. B. Ultraschallsysteme, die im Vorbeifahren erkennen können, ob Parklücken belegt oder frei sind, und diese Lücken gegebenenfalls auch vermessen können, existieren bereits in vielen modernen Fahrzeugen und sind über Softwarezusätze leicht erweiterbar. Insbesondere sind hier semiautonome oder autonome Parkassistenzsysteme zu nennen, welche den Fahrer durch Eingriff in die Längs- und/oder Querregelung des Fahrzeugs in eine Parklücke navigieren und dafür die Parklücke exakt vermessen müssen. Das Fahrzeug fungiert als mobiles Sensorsystem, um eine lokale Karte von freien und belegten Parkplätzen während der Fahrt zu ermitteln, ohne dass dies den Fahrer beeinflusst oder der Fahrer aktiv handeln muss. Die lokalen Informationen über freie Parkplätze werden der Cloud übermittelt und zur Verfügung gestellt. Bei entsprechender Anzahl von Fahrzeugen, welche mit entsprechenden Umgebungserfassungseinrichtungen und Kommunikationseinheiten zur Übermittlung der Informationen ausgestattet sind, entsteht so auch ohne jegliche zusätzliche stationäre Sensorik eine flächendeckende Karte über die freien Parkplätze. Weitere Sensorik und/oder Informationen können dennoch einbezogen werden, um z. B. eine bessere Qualität oder eine höhere Abdeckung zu erzielen. Es kann beispielsweise vorgesehen sein, durch stationär angeordnete Sensoren zusätzliche Informationen über entlegenen Regionen zu erhalten, welche nicht von vorbeifahrenden Fahrzeugen vermessen werden. Die Erfassung erfolgt insbesondere unabhängig davon, ob Parkplatzmarkierungen real vorliegen oder nicht.

Nach einer bevorzugten Ausführungsform der Erfindung wird der Ort des freien Parkplatzes durch den Verkehrsteilnehmer bzw. durch ein dem Verkehrsteilnehmer zugeordnetes Gerät ermittelt und dem Cloud-Computing-System übermittelt. Besonders bevorzugt wird der Ort über ein Navigationssystem ermittelt. Navigationssysteme, welche über GPS die aktuelle Fahrzeugposition in einer Karte ermitteln können, sind in vielen Fahrzeugen bereits serienmäßig verbaut oder können beispielsweise in einem mobilen Gerät vorhanden sein, welches an das Fahrzeug anschließbar und zu den Zwecken geeignet ist. Diese Systeme sind über Softwarezusätze leicht erweiterbar. Das GPS-System erfasst ständig die Position des Fahrzeugs und kann somit die Informationen des Parkassistenten über freie Parkplätze mit einer lokalen Karte verknüpfen. Mit anderen Worten sind auf einem Server in der Cloud Informationen über den potentiellen und öffentlich zugänglichen Parkraum, z.B. in Form von Positionsdaten (GPS, etc), Breite und Länge, und Ausrichtung (Quer- und Längsparken), gespeichert und durch die Verkehrsteilnehmer abrufbar, wobei die Information durch Rückmeldung der teilnehmenden Fahrzeuge ständig aktualisiert wird.

Nach einer Ausführungsform wird außerdem eine Größe des freien Parkplatzes ermittelt und dem Cloud-Computing-System übermittelt. Die Ermittlung der Größe erfolgt dabei erfindungsgemäß unabhängig davon, ob Markierungen des Parkplatzes vorhanden sind, oder nicht. Die Ermittlung der Größe des Parkplatzes erfolgt bevorzugt über ein Ultraschallsystem, welches beispielsweise Teil eines Parkassistenten ist. Bei der Vorbeifahrt des Fahrzeugs wird der seitliche Abstand zu Hindernissen gemessen und über die Fahrzeugeigenbewegung erkannt, ob eine freie Parklücke vorhanden ist und welcher Dimension sie entspricht.

Nach einer Ausführungsform werden generell Meta-Informationen über freie und belegte Parkplätze ermittelt und dem Cloud-Computing-System übermittelt. Derartige Meta-Informationen können insbesondere von Kameras gewonnen werden. Die Meta-Informationen über die Parkplätze können beispielsweise durch eine Schilderkennung gewonnen werden, beispielsweise indem temporäre Halteverbotsschilder oder Schilder zur Kennzeichnung von Anwohner-, Behinderten-, Familien-, Frauen- oder Privatparkplätzen durch ein Kamerasystem und eine Bildverarbeitung erkannt werden und die entsprechende Information mit der Information über den Parkplatz verknüpft werden.

Nach einer bevorzugten Ausführungsform der Erfindung werden dem Verkehrsteilnehmer bei einem Abruf, d. h. auf Anfrage bei dem Cloud-Computing-System, freie Parkplätze und Metadaten hierzu übermittelt. Dabei ist eine Vorfilterung der Parkplätze bezüglich verschiedener Metainformationen möglich. Die Anfrage bei dem Cloud-Computing-System kann über eine Verbindung zur Cloud, z. B. mittels einer integrierten SIM-Karte oder einem beim Fahrzeug beispielsweise über Bluetooth oder USB angemeldeten mobilen Gerät, insbesondere einem Smartphone, hergestellt werden. Die anfragenden Geräte müssen nicht zwangsläufig in einem Fahrzeug verbaut sein, das mit einer Vermessungseinrichtung ausgestattet ist, sondern können in beliebigen Fahrzeugen nutzbar sein. Die anfragenden Geräte müssen außerdem nicht zwangsläufig Fahrzeugen zugeordnet sein. Anfragemöglichkeiten können auch durch einen Webservice bereitgestellt werden. Zusätzlich hierzu kann vorgesehen sein, auch Informationen über belegte Parkplätze und Metadaten hierüber zu übermitteln.

Während bisherige Systeme sich auf fahrzeugspezifische Informationen und wenige Eigenschaften des Parkplatzes beschränkten, beispielsweise auf dessen Größe, werden bei der Lösung mithilfe des Cloud-Computing-Systems eine Fülle von Metainformationen über den Parkplatz und Statistiken nutzbar. Meta-Daten und Statistiken über die Parklücken, welche das Cloud-Computing-System dem Verkehrsteilnehmer bei einem Abruf übermittelt, umfassen beispielsweise, ob diese kostenpflichtig oder gebührenfrei sind und tagesaktuelle oder zeitabhängige Informationen. Einige Metainformationen, wie beispielsweise die Information über Parkgebühren, Verteilung von Anwohner-, Behinderten-, Familien- oder Frauenparkplätzen, können in einigen Ausführungsformen der Erfindung auch von Städten und Gemeinden eingepflegt oder über Data-Mining-Methoden aus dem Internet extrahiert werden. Durch die Anbindung von Verkehrsleitzentralen an das Cloud-Computing-System können (virtuelle) Parkplätze abhängig vom aktuellen Verkehr oder anderen Randbedingungen zur Verfügung gestellt werden. D.h. die Parkplatzsuche lässt sich vorteilhaft gezielt steuern, beispielsweise zu Hauptverkehrszeiten oder bei (Groß-) Veranstaltungen

Derartige abrufbare Metadaten über den Parkplatz können beispielsweise umfassen: Höhe einer Parkgebühr, ob und wann ein Anwohnerparkplatz vorliegt, ob und wann ein Kurzzeitparkplatz vorliegt, ob ein Behindertenparkplatz vorliegt, ob ein Familien- oder Frauenparkplatz vorliegt. Weitere abrufbare Metadaten über den Parkplatz können beispielsweise Informationen über den Stadtteil umfassen, insbesondere ob aktuell Veranstaltungen in der Nähe stattfinden und ob eine Anbindung an ein öffentliches Transportsystem, beispielsweise eine S-Bahnanbindung vorliegt.

Abrufbare Statistiken über den Parkplatz können umfassen: Tages-, wochentags- und/oder jahreszeitenabhängige Nutzung des Parkplatzes und eine Anzahl von Aufbruchsdelikten in der Umgebung. Es kann beispielsweise vorgesehen sein, dass eine Information abgegeben wird, dass Parkplätze eines bestimmten Stadtteils in der Regel morgens belegt und erst abends wieder frei sind.

Möglich ist auch ein Berechnen der Zuverlässigkeit der Angabe "Parkplatz frei" bzw. "Parkplatz belegt" für eine verbesserte Qualität der Information. Die Angabe erfolgt daher nicht nur mit einem Zeitstempel, wann der entsprechende Parkplatz frei war, sondern auch auf Basis der Anzahl der Meldungen und der Zuverlässigkeit der meldenden Fahrzeuge.

In weiteren Ausbaustufen können Fahrer freie Parkplätze in der Umgebung auswählen und die Fahrzeuge autonom oder semiautonom diese Parkplätze anfahren lassen. Vorteilhaft lassen sich aus den Metainformationen und Statistiken komplexere Navigationsempfehlungen ableiten, z.B. Bevorzugen von Regionen mit generell vielen oder vielen freien Parkplätzen. Ein Fahrer kann sich somit beispielsweise ins Stadtzentrum navigieren lassen und dort parken, wobei er Präferenzen vorgeben kann, beispielsweise das Vermeiden von Parkhäusern. Weiterhin können Fahrer gezielt Straßenzüge, Innenstadtbereiche, oder Stadtteile ansteuern lassen, bei denen die Chance auf einen freien Parkplatz zum jetzigen Zeitpunkt besonders hoch ist. Hierzu können beispielsweise auf Basis der gesammelten Daten in der Cloud berechnete tageszeitabhängige Nutzungsstatistiken herangezogen werden.

Besonders vorteilhaft ist, dass das Cloud-Computing-System freie Plätze in einer lokalen Umgebung des Verkehrsteilnehmers oder eines bestimmten Ortes, beispielsweise eines bekannten Navigationsziels ermitteln und bereitstellen kann. Der Ort des Fahrzeugs kann hierzu beispielsweise per GPS ermittelt werden und bei der Anfrage mit übertragen oder vom Cloud-Computing-System in einem Dialog abgefragt werden. Der bestimmte Ort kann über eine Eingabe, etwa eine textliche oder eine sprachliche Eingabe durch den Nutzer dem Cloud-Computing-System angegeben werden. Das Navigationsziel kann beispielsweise auch durch direkte Interaktion mit dem Navigationsinstrument übermittelt werden. Die Größe der lokalen Umgebung kann beispielsweise von dem Verkehrsteilnehmer, welcher die Anfrage gestellt hat, vorgegeben werden. Beispielsweise ist der Wert für die Größe der lokalen Umgebung im HMI zunächst voreingestellt und vergrößerbar oder verkleinerbar. Vorteilhaft können somit lokale Ausschnitte der globalen Karte von Verkehrsteilnehmern ortsbezogen über eine Applikation für ein Smartphone oder über ein Navigationsgerät wieder zugänglich gemacht werden.

Nach einer weiteren Ausführungsform der Erfindung bietet das Cloud-Computing-System hinsichtlich der Fahrzeugabmessungen, der Wünsche des Verkehrsteilnehmers und/oder hinsichtlich abgleichbarer Metainformationen geeignete freie Parkplätze an, d. h. beispielsweise werden lediglich solche freien Parkplätze angezeigt, welche mit den Abmessungen des Fahrzeugs des Verkehrsteilnehmers kompatibel sind. Dies ist besonders vorteilhaft, da heutige Parkassistenzsysteme die Parklücken exakt vermessen können.

Weiterhin besteht die Möglichkeit, bestehende Parkhaussysteme mit freien Parkplätzen über die Cloud zu integrieren. Vorteilhaft wird möglichst viel Information über freie Parkplätze in der Umgebung des Fahrzeugs bereitgestellt und diese aus unterschiedlichen Quellen kombiniert. Die Information über die Belegung eines Parkhauses kann von dem Betreiber des Parkhauses im Internet bereitgestellt sein oder beispielsweise auch mittels eines Verkehrsteilnehmers erfolgen, der über ein Kamerasystem verfügt, und der an einer die Belegung eines Parkhauses angebenden Informationstafel vorbeifährt und die darauf befindliche Information übermittelt.

Erfindungsgemäß werden weiterhin Computerprogramme vorgeschlagen, gemäß dem die hierin beschriebenen Verfahren durchgeführt werden, wenn die Computerprogramme auf programmierbaren Computereinrichtungen ausgeführt werden. Bei einem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem mobilen Gerät ausführbar ist. Das mobile Gerät kann beispielsweise ein Smartphone, ein Tablet-PC, ein Notebook und/oder ein Navigationsgerät im Automobil umfassen, das einen Rechner, ein Display, ein Eingabegerät (HMI) und GPS aufweist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa auf einem Server oder einem Cloud-Computing-System zum Herunterladen bereitgestellt werden, z.B. über ein Datennetzwerk wie das Internet oder eine Kommunikationsverbindung wie etwa eine Telefonleitung oder eine drahtlose Verbindung.

Nach einem weiteren Aspekt der Erfindung umfasst ein Freier-Parkplatz-Assistenzsystem ein Cloud-Computing-System, welches eingerichtet ist, Informationen über freie Parkplätze zu empfangen und in eine Parkplatzkarte aufzunehmen und welches eingerichtet ist, die Informationen über die freien Parkplätze auf Anfrage, d. h. bei einem Abruf, bereitzustellen.

Einzelne Fahrzeuge liefern nur sehr eingeschränkte lokale Informationen. Sobald eine genügend große Anzahl von Fahrzeugen mit den entsprechenden Software-Bausteinen ausgestattet ist, verschmelzen die eingeschränkten lokalen Informationen innerhalb der Cloud aufgrund ihrer Vielzahl zu einer globalen, flächendeckenden und aktuellen Karte über die Parkplatzsituation im gesamten Verbreitungsgebiet des Freien-Parkplatz-Assistenzsystems.

Eine Stärke des Freien-Parkplatz-Assistenzsystems besteht darin, dass die Informationen über freie Parkplätze in der Cloud dort am verlässlichsten und aktuellsten sind, wo am meisten Nutzer darauf angewiesen sind, nämlich insbesondere in Innenstädten, in Einkaufszentren oder in anderen Ballungsgebieten. Hier fahren im Verhältnis am meisten Fahrzeuge mit dem Freien-Parkplatz-Assistenzsystem und sorgen dafür, dass die Informationen in der Cloud ständig aktualisiert werden.

Nach einer bevorzugten Ausführungsform umfasst das Freier-Parkplatz-Assistenzsystem zumindest ein Fahrzeug mit einer Umgebungserfassungseinrichtung und einer Kommunikationseinheit, wobei die Umgebungserfassungseinrichtung eingerichtet ist, freie Parkplätze und idealerweise zusätzliche Metainformationen über freie und belegte Parkplätze in der Umgebung des Fahrzeugs zu ermitteln und wobei die Kommunikationseinheit eingerichtet ist, ermittelte Informationen an das Cloud-Computing-System zu übertragen.

Die Umgebungserfassungseinrichtung ist bevorzugt bereits im Serieneinsatz als Teil eines Parkassistenzsystems vorhanden. Hierdurch wird das Parkassistenzsystem zu einem mobilen Sensorsystem, welches in dem direkten Umfeld des Fahrzeugs entlang der vom Fahrer gewählten Fahrstrecke Informationen über die aktuelle Parkplatzsituation ermitteln kann.

Bevorzugt umfasst das Freier-Parkplatz-Assistenzsystem eine weitere Einheit, beispielsweise ein mobiles Gerät oder ein Navigationsmodul, welches eingerichtet ist, d. h. auf welchem beispielsweise eine geeignete Applikation installiert ist, um Informationen über die freien Parkplätze von dem Cloud-Computing-System abzurufen, bevorzugt die Informationen nach geeigneten Kriterien vorzufiltern, und einem Verkehrsteilnehmer bereitzustellen. Die Einheit kann beispielsweise eine Anzeige auf einem mobilen Gerät oder im Fahrzeug ansteuern oder eine Sprachnachricht absetzen oder auch ein Gespräch mit dem Verkehrsteilnehmer führen.

Mithilfe der mobilen Geräte oder der Navigationsmodule lassen sich weitere Informationen gewinnen und dem Cloud-Computing-System übermitteln, beispielsweise dass ein freier Parkplatz gerade belegt wurde oder auch Statistiken über Nutzungsverhalten. Da solch ein System nur über eine große Verbreitung Erfolg hat, ist die Verwendung dieser zusätzlichen und in der Masse weit verbreiteten Geräte für den Start solch eines Dienstes sehr vorteilhaft.

Die Nutzung des erfindungsgemäßen Verfahrens stellt für den Nutzer einen Mehrwert dar und kann daher beispielsweise kostenpflichtig angeboten werden, z.B. über die Integration in ein Navigationsgerät, oder kann als Werbemaßnahme genutzt werden. Zur Nutzung des erfindungsgemäßen Verfahrens ist es nicht notwendig, dass das Fahrzeug des Verkehrsteilnehmers ein Parkassistenzsystem oder ähnliches aufweist. Es sind Geschäftsmodelle denkbar, bei denen Nutzer ohne Umgebungserfassungseinrichtung, welche also keinen Beitrag zur globalen Karte in der Cloud liefern, einen höheren Nutzungsbeitrag bezahlen, als Nutzer, die über ihren Parkassistenten zum Aufbau der Karte in der Cloud beitragen. Es kann auch eine gestaffelte Kostenstruktur realisiert werden.

Möglich ist auch ein Anbieten eines Reservierungssystems gegen Entgelt, das die Parkplätze zentral in der Cloud verwaltet, was durch entsprechende Ausstattung der Parkplätze realisiert wird.

Weiterhin möglich ist, vom Cloud-System gesammelte Statistiken weiter nutzbar zu machen, etwa bei der Verkehrsplanung einer Stadt.

### Kurze Beschreibung der Zeichnungen

Ausführungsbeispiele der Erfindung sind in der folgenden Zeichnung dargestellt und werden in der nachfolgenden Beschreibung näher erläutert.

Es zeigt
- Fig. 1: eine schematische Darstellung eines Freien-Parkplatz-Assistenzsystems.
- Fig. 2A-D: schematisch einen erfindungsgemäßen Ablauf beim Zurverfügungstellen eines virtuellen Parkplatzes.
- Figur 3A und 3B: den Sichtbereich des Fahrers ohne und mit angezeigten Informationen zu einem virtuellen Parkplatz.

### Ausführungsformen der Erfindung

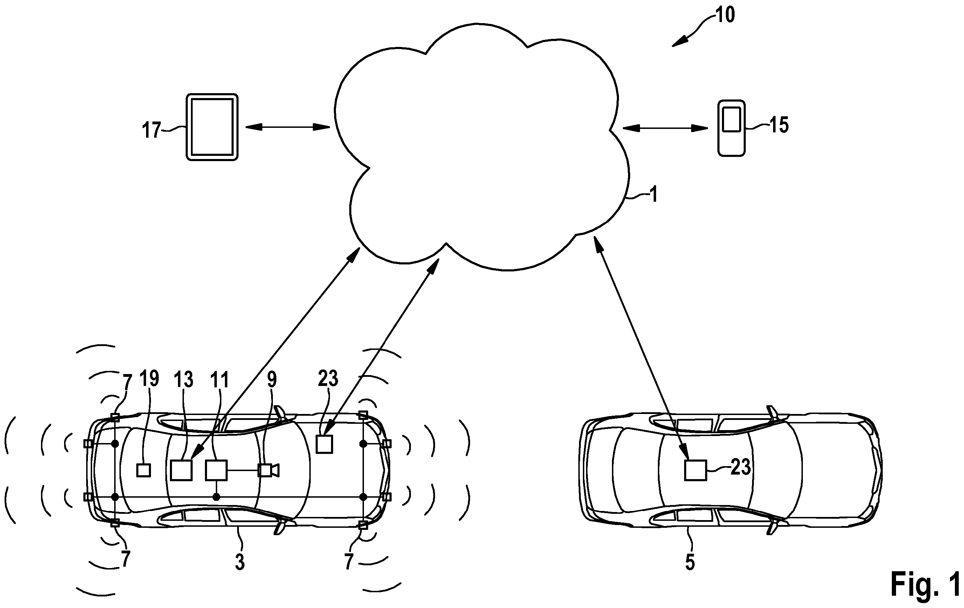

Fig. 1 zeigt eine schematische Darstellung eines Freien-Parkplatz-Assistenzsystems 10 mit einem Cloud-Computing-System 1, einem ersten Fahrzeug 3, einem zweiten Fahrzeug 5, einem mobilen Gerät 15 und einem Tablet-PC 17. Das Freier-Parkplatz-Assistenzsystem 10 eignet sich zur Ausführung der vorher beschriebenen Verfahren.

Das Cloud-Computing-System 1 im Rahmen der Erfindung umfasst zumindest eine Rechnerwolke, welche einen Nutzungszugang von virtualisierten Computerhardware-Ressourcen wie Rechner, Netzwerken und Speicher anbietet. Des Weiteren kann das Cloud-Computing-System 1 auch Software-on-Demand-Strukturen aufweisen, nämlich Rechnerwolken, welche Nutzungszugang von Softwaresammlungen und Anwendungsprogrammen bieten. Das Cloud-Computing-System 1 ist dazu eingerichtet, Informationen über freie Parkplätze zu empfangen und in eine Parkplatzkarte aufzunehmen und eingerichtet, die Informationen über die freien Parkplätze auf Anfrage, d. h. bei einem Abruf, bereitzustellen. Es sammelt alle lokalen Informationen der einzelnen vernetzten Fahrzeuge und trägt diese über eine geeignete Fusionsstrategie mittels der Positionsinformation in einer globalen Karte ein. Manuell eingegebene Information, etwa betreffend die Parkkosten und Kennzeichnung als Anwohnerparkplatz, aus dem Internet gewonnene Information, etwa dass ein autofreier Sonntag in einer Stadt angesagt ist und bestehende stationäre Informationssysteme, etwa öffentlich zugängliche Informationen über die Belegung von Parkhäusern, können über entsprechende Schnittstellen in die globale Karte der Cloud integriert werden. Erfindungsgemäß liegen die Parkplätze zumindest teilweise als virtuelle Parkplätze vor.

Das Cloud-Computing-System 1 kann über die Kommunikationsschnittstellen der Fahrzeuge 3, 5 und der Geräte 15, 17 Daten von diesen empfangen und an diese übermitteln. Das Cloud-Computing-System 1 vernetzt hierzu das Fahrzeug mit Datenbanken, wobei die Kommunikation z. B. über ein Handynetz, mittels eingebauter SIM-Card oder über ein angekoppeltes mobiles Gerät, wie z. B. ein Smartphone oder ein Handy, beispielsweise über GSM, UMTS oder LTE erfolgen kann.

Das erste Fahrzeug 3 weist eine Umgebungserfassungseinrichtung 11 auf, die hier beispielhaft dargestellt front- und heckseitig angeordnete Ultraschallsensoren 7 und eine in der Windschutzscheibe des Fahrzeugs 3 angeordnete Frontkamera 9 umfasst.

Das Umgebungserfassungseinrichtung 11 kann Ultraschallsysteme mit Gruppen von Ultraschallsensoren umfassen, welche gemeinsam eine Teilumgebung des Fahrzeuges erfassen, beispielsweise können die Ultraschallsensoren im Frontbereich zur Erfassung einer vorderseitigen Fahrzeugumgebung und/oder die Ultraschallsensoren im Seitenbereich zur Erfassung eines Seitenbereichs des Fahrzeugs und/oder die Ultraschallsensoren im Heckbereich zur Erfassung einer rückwärtigen Umgebung des Fahrzeugs jeweils einem Ultraschallsystem zugeordnet sein. Dabei können vier bis sechs Sensoren in einem Stoßfänger verbaut werden, wobei nur maximal vier Sensoren mit ungefähr derselben Blickrichtung montiert sind. Insbesondere, um auch den Bereich neben dem Kraftfahrzeug zu erfassen, werden im vorderen Stoßfänger Sensoren positioniert, die nach links und nach rechts ihren Erfassungsbereich haben. Zusätzlich oder alternativ können auch im hinteren Stoßfänger Sensoren derart positioniert sein, dass diese einen Bereich links und rechts neben dem Kraftfahrzeug erfassen. Das Ultraschallsystem kann darüber hinaus auch eine der jeweiligen Gruppe zugeordnete Steuereinrichtung und eine Signalverarbeitungseinrichtung umfassen.

Die Umgebungserfassungseinrichtung 11 kann weitere Umgebungssensoren umfassen, beispielsweise ein Kurzbereichs-Radarsystem, ein Infrarotsystem, PMD und/oder ein Lidarsystem, aber auch mehrerer Bildsensoren, insbesondere Frontkameras, Heckkameras, BSD-Kameras ("Blind Spot Detection"-Kameras), SVA-Kameras ("Side View Assistant"-Kameras), und/oder SVS-Kameras ("Surround View System"-Kameras), welche beispielsweise von weiteren Fahrassistenzsystemen für andere Zwecke eingesetzt werden können. Die Kameras können monokulare Kameras oder Kameras eines Stereokamerasystems sein.

Bevorzugt werden in optischen Systemen ein Videosensor im Frontbereich, vorzugsweise mittig, ein Videosensor im Heckbereich, ebenfalls vorzugsweise mittig und jeweils ein Videosensor auf jeder Seite des Kraftfahrzeugs angeordnet. Die Videosensoren im Frontbereich und im Heckbereich können z. B. im Bereich der Windschutzscheibe, beispielsweise in der Halterung des Innenspiegels, und im Bereich der Heckscheibe positioniert sein. Bevorzugt werden zusätzlich Videosensoren im Bereich der Stoßfänger angeordnet. Hierdurch ist es möglich, das gesamte Umfeld um das Kraftfahrzeug zu erfassen. Bei optischen Sensoren wird bekanntermaßen eine Bildverarbeitungssoftware herangezogen.

Die Umgebungserfassungseinrichtung 11 ist ein Teil eines Parkassistenzsystems des ersten Fahrzeugs 3, welches im Rahmen der Erfindung auch kurz als Parkassistent bezeichnet sein kann und welches Parklücken während der Vorbeifahrt vermisst und deren Status erfasst. Die Umgebungserfassungseinrichtung 11 ist dazu eingerichtet, freie Parkplätze in der Umgebung des Fahrzeugs zu ermitteln.

Das erste Fahrzeug 3 weist außerdem ein Navigationsmodul 19 auf, welches die Position des Fahrzeugs 3 ständig erfasst. Das Navigationsmodul 19 kann über eine bestehende Karte dem Parkassistenzsystem eine Hilfestellung bezüglich bekannter Parkplätze und/oder bezüglich zu ignorierender Hindernisse und/oder Lücken wie z. B. Einfahrten geben. Infolge dessen ermittelt und übermittelt das Parkassistenzsystem lediglich freie Parkplätze und nicht jede freie Fläche seitlich neben dem Fahrzeug.

Das erste Fahrzeug 3 weist außerdem eine Kommunikationseinheit 13 auf. Die Kommunikationseinheit 13 ist eingerichtet, ermittelte Informationen über die freien Parkplätze an das Cloud-Computing-System 1 zu übertragen.

Das erste Fahrzeug 3 und das zweite Fahrzeug 5 weisen Einheiten 23 auf, welche eingerichtet sind, um Informationen über die freien Parkplätze von dem Cloud-Computing-System 1 abzurufen und einem Verkehrsteilnehmer bereitzustellen. Die Kommunikation kann z. B. über ein Handynetz, mittels eingebauter SIM-Card oder über ein angekoppeltes mobiles Gerät, wie z. B. ein Smartphone oder ein Handy erfolgen. Die Kommunikationseinheit 13 kann beispielsweise eine Anzeige, insbesondere ein Head-Up Display im Fahrzeug ansteuern oder eine Sprachnachricht absetzen. Das zweite Fahrzeug 5 ist ohne Umgebungserfassungseinrichtung ausgestattet, liefert also keinen Beitrag zur globalen Karte in der Cloud, empfängt jedoch die von dem Cloud-Computing-System 1 bereitgestellten Informationen über, insbesondere virtuelle, Parkplätze.

Die Einheit 13 des ersten Fahrzeugs 3 ist mit dem Navigationsmodul 19 verbunden. Über das Navigationsmodul 19 erfolgt die Darstellung der von der Cloud 1 übermittelten freien Parkplätze, sowie bevorzugt auch die Interaktion mit dem Fahrer des ersten Fahrzeugs 3 zur Auswahl eines freien Parkplatzes und die Fahrzeuge autonom oder semiautonom diese Parkplätze anfahren zu lassen.

Das mobile Gerät 15 und der Tablet-PC 17 stellen beispielhaft weitere Einheiten dar, welche eingerichtet sind, um Informationen über die freien Parkplätze von dem Cloud-System abzurufen und einem Verkehrsteilnehmer bereitzustellen. Über eine geeignete App werden die lokalen Ausschnitte der globalen Karte mit den freien Parkplätzen in der Cloud 1 dem Verkehrsteilnehmer zugänglich gemacht.

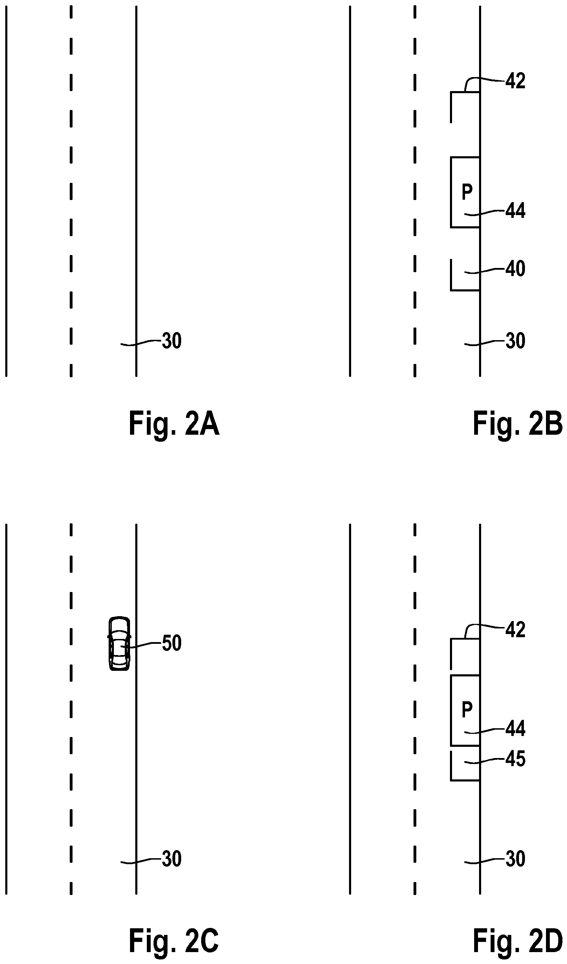

Das erfindungsgemäße Verfahren ist weiter in Figur 2 verdeutlicht:
Figur 2A stellt schematisch eine reale Ansicht eines Straßenzuges 30 in Vogelperspektive dar. Dem Fahrer eines mit einem erfindungsgemäß ausgebildeten Assistenzsystem ausgerüsteten Fahrzeugs 50 ist zunächst nicht ersichtlich, dass Teilbereiche dieses Straßenzuges 30 als Parkflächen zur Verfügung stehen, da keine Parkplatzmarkierungen, wie etwa Begrenzungslinien auf der Fahrbahn vorhanden sind. Dem Cloud-Computing-System 1 ist jedoch aufgrund der GPS- Position des Fahrzeugs 50 bekannt, dass eine bestimmte Fläche 40 am rechten Fahrbahnrand, wie in Figur 2B dargestellt, als öffentlicher Parkraum freigegeben und derzeit nicht belegt ist. bei der Fläche 40 handelt es sich demnach um eine virtuelle Parkfläche.

Die zum Parken zur Verfügung stehende Fläche 40 wird dem Fahrer erfindungsgemäß angezeigt. Dazu werden in diesem Beispiel, wie in Figur 2B angedeutet, virtuelle Parkplatzmarkierungen 42 erzeugt und dem Fahrer auf einem Head-Up-Display angezeigt. Zusätzlich kann ein Parkplatzsymbol 44 eingeblendet werden. Optional können zusätzliche Informationen, wie beispielsweise die maximale Parkdauer, Parkgebühren oder aktuelle Abstandsinformationen vom Cloud-Computing-System 1 bereitgestellt und dem Fahrer angezeigt werden.

Der Fahrer hat nun alle benötigten Informationen, um das Fahrzeug 50, wie in Figur 2C gezeigt, innerhalb der Fläche 40 abzustellen. Nach Beendigung des Parkvorgangs sendet das Fahrzeug seine Parkposition und gegebenenfalls noch weitere Informationen, wie etwa die voraussichtliche Parkdauer an das Cloud-Computing System 1. Aus diesen Informationen kann das Cloud-Computing-System eine aktualisierte Karte generieren, die eine entsprechend der Parkposition und Größe des Fahrzeugs 50 verkleinerte freie Parkfläche 45 vorsieht, wie in Figur 2D dargestellt ist.

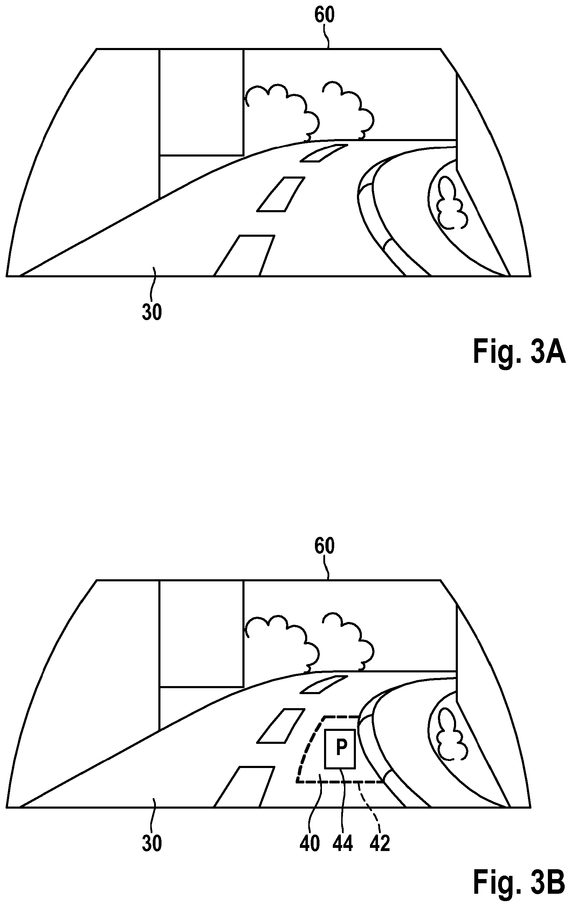

In Figur 3 ist die in Bezug auf Figur 2 beschriebene Situation nochmals schematisch aus der Sicht des Fahrers dargestellt. Figur 3 A zeigt den reale Sicht 60 des Fahrers auf den Straßenzug 30, der keine eingezeichneten Parkflächen aufweist.

In Figur 3B ist die Ansicht bei aktiviertem Assistenzsystem dargestellt. Mittels eines Head-Up-Displays werden dem Fahrer die durch das Cloud-Computing-System erhaltenen Informationen über die verfügbare Parkfläche 40 dargestellt. Es werden virtuelle Begrenzungslinien 42, sowie ein Parkplatzsymbol 44 erzeugt und dem Fahrer derart auf dem Head-Up-Display dargestellt, dass nach dem Prinzip der "Augmented Reality" ein realistischer Eindruck einer Parkplatzbegrenzung für den Fahrer entsteht. Dadurch wird dem Fahrer das korrekte Parken erleichtert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Parkplatzvermittlung, wobei Verkehrsteilnehmer (3, 5, 50) Informationen über freie Parkplätze ermitteln und die Informationen an ein Cloud-Computing-System (1) übermitteln, wobei das Cloud-Computing-System (1) Informationen über die freien Parkplätze in eine Parkplatzkarte abrufbar aufnimmt, wobei das Cloud-Computing-System (1) freie Parkplätze (40) in einer lokalen Umgebung des Verkehrsteilnehmers (3, 5, 15, 17) und/oder in einer Umgebung eines bekannten Navigationsziels ermittelt und bereitstellt, **dadurch gekennzeichnet, dass** unter Verwendung der Informationen über freie Parkplätze (40) ein Parkplatz in Form einer Parkfläche angezeigt wird, wobei wenn keine Parkplatzmarkierungen auf der Fahrbahn vorhanden sind, virtuelle Begrenzungslinien (42) erzeugt werden, wobei dem Cloud-Computing-System (1) aufgrund der GPS- Position des Fahrzeugs (50) bekannt ist, dass eine bestimmte Fläche (40) als öffentlicher Parkraum freigegeben und derzeit nicht belegt ist, und wobei Informationen umfassend die virtuellen Begrenzungslinien (42, 44) über den freien Parkplatz auf einem Anzeigegerät des Verkehrsteilnehmers visuell dargestellt werden, wobei das Anzeigegerät ein Head-Up-Display ist, das geeignet ist virtuelle Objekte (42, 44) in den Sichtbereich (60) des Verkehrsteilnehmers einzublenden.

2. Verfahren nach Anspruch 1, **dadurch gekennzeichnet, dass** die Informationen über den bereitgestellten Parkplatz ferner ein virtuelles Parkplatzsymbol (44) umfassen.

3. Verfahren nach Anspruch 1 oder 2, **dadurch gekennzeichnet, dass** die Verkehrsteilnehmer (3) mit Umgebungserfassungseinrichtungen (11) ausgestattete Fahrzeuge sind, die bei einer Vorbeifahrt an freien Parkplätzen die freien Parkplätze ermitteln, insbesondere unabhängig davon, ob Parkplatzmarkierungen real vorliegen.

4. Verfahren nach einem der vorhergehenden Ansprüche, **dadurch gekennzeichnet, dass** Ort und/oder Größe und/oder weitere Meta-Informationen von Parkplätzen ermittelt werden.

5. Verfahren nach einem der vorhergehenden Ansprüche, **dadurch gekennzeichnet, dass** der Ort des freien Parkplatzes über ein Navigationssystem (19) ermittelt wird.

6. Verfahren nach einem der vorhergehenden Ansprüche, **dadurch gekennzeichnet, dass** bei einem Abruf freie Parkplätze einem Verkehrsteilnehmer (3, 5, 15, 17) angezeigt werden.

7. Verfahren nach einem der vorhergehenden Ansprüche, **dadurch gekennzeichnet, dass** das Cloud-Computing-System (1) anhand von Fahrzeugabmessungen des Verkehrsteilnehmers (3, 5, 15, 17), anhand von Wünschen des Verkehrsteilnehmers (3, 5, 15, 17) und/oder von Eigenschaften des Parkplatzes geeignete freie Parkplätze ermittelt und bereitstellt.

8. Verfahren nach einem der vorhergehenden Ansprüche, **dadurch gekennzeichnet, dass** das Cloud-Computing-System (1) abhängig von aktuellen Bedingungen vorgegebene Flächen als Parkflächen zur Verfügung stellt oder blockiert.

9. Computerprogramm zur Durchführung eines der Verfahren nach einem der Ansprüche 1 bis 8, wobei das Computerprogramm auf einer programmierbaren Computereinrichtung ausgeführt wird.

10. Freier-Parkplatz-Assistenzsystem (10) zur Durchführung eines Verfahrens nach einem der Ansprüche 1 bis 8, umfassend ein Cloud-Computing-System (1), welches eingerichtet ist, Informationen über freie Parkplätze zu empfangen und in eine Parkplatzkarte aufzunehmen und welches eingerichtet ist, die Informationen über die freien Parkplätze auf Anfrage bereitzustellen, wobei das Cloud-Computing-System (1) freie Parkplätze in einer lokalen Umgebung des Verkehrsteilnehmers (3, 5, 15, 17) und/oder in einer Umgebung eines bekannten Navigationsziels ermittelt und bereitstellt,

11. Freier-Parkplatz-Assistenzsystem (10) nach Anspruch 10, **dadurch gekennzeichnet, dass** das Freier-Parkplatz-Assistenzsystem (10) zumindest ein Fahrzeug mit einem Anzeigegerät umfasst, wobei Informationen über den bereitgestellten Parkplatz auf einem Anzeigegerät des Verkehrsteilnehmers visuell dargestellt werden.

12. Freier-Parkplatz-Assistenzsystem (10) nach Anspruch 10 oder 11, umfassend zumindest ein Fahrzeug (3) mit einer Umgebungserfassungseinrichtung (11) und einer Kommunikationseinheit (13), wobei die Umgebungserfassungseinrichtung (11) eingerichtet ist, freie Parkplätze in der Umgebung des Fahrzeugs (3) zu ermitteln und wobei die Kommunikationseinheit (13) eingerichtet ist, ermittelte Informationen über die freien Parkplätze an das Cloud-Computing-System (1) zu übertragen.

13. Freier-Parkplatz-Assistenzsystem (10) nach einem der Ansprüche 10 bis 12, umfassend eine einem Verkehrsteilnehmer (3, 5) zugeordnete, insbesondere mobile, Einheit (23), welche eingerichtet ist, Informationen über die freien Parkplätze von dem Cloud-Computing-System (1) abzurufen und dem Verkehrsteilnehmer (3, 5) bereitzustellen.

## Claims

1. Method for communicating parking spaces, wherein road users (3, 5, 50) ascertain information about free parking spaces and transmit the information to a cloud computing system (1), wherein the cloud computing system (1) stores information about the free parking spaces in retrievable fashion in a parking space map, wherein the cloud computing system (1) ascertains and provides free parking spaces (40) in local surroundings of the road user (3, 5, 15, 17) and/or in surroundings of a known navigation destination, **characterized in that** using the information about free parking spaces (40) a parking space is displayed in the form of a parking area, wherein if no parking space markings are present on the roadway, virtual boundary lines (42) are generated, wherein the cloud computing system (1) knows, on the basis of the GPS position of the vehicle (50), that a specific area (40) is approved as a public place for parking and is currently unoccupied, and wherein information comprising the virtual boundary lines (42, 44) regarding the free parking space is represented visually on a display device of the road user, wherein the display device is a head-up display suitable for inserting virtual objects (42, 44) into the field of view (60) of the road user.

2. Method according to Claim 1, **characterized in that** the information about the provided parking space furthermore comprises a virtual parking space symbol (44) .

3. Method according to Claim 1 or 2, **characterized in that** the road users (3) are vehicles which are equipped with surroundings detecting devices (11) and which, when travelling past free parking spaces, ascertain the free parking spaces, in particular independently of whether parking space markings are really present.

4. Method according to any of the preceding claims, **characterized in that** location and/or size and/or further meta-information regarding parking spaces are/is ascertained.

5. Method according to any of the preceding claims, **characterized in that** the location of the free parking space is ascertained by way of a navigation system (19).

6. Method according to any of the preceding claims, **characterized in that** in the event of retrieval, free parking spaces are displayed to a road user (3, 5, 15, 17) .

7. Method according to any of the preceding claims, **characterized in that** the cloud computing system (1) ascertains and provides suitable free parking spaces on the basis of vehicle dimensions of the road user (3, 5, 15, 17), on the basis of desires of the road user (3, 5, 15, 17) and/or on the basis of properties of the parking space.

8. Method according to any of the preceding claims, **characterized in that** the cloud computing system (1) makes available or blocks predefined areas as parking areas depending on current conditions.

9. Computer program for carrying out one of the methods according to any of Claims 1 to 8, wherein the computer program is executed on a programmable computer device.

10. Free parking space assistance system (10) for carrying out a method according to any of Claims 1 to 8, comprising a cloud computing system (1) configured to receive information about free parking spaces and to store it in a parking space map, and configured to provide the information about the free parking spaces on request, wherein the cloud computing system (1) ascertains and provides free parking spaces in local surroundings of the road user (3, 5, 15, 17) and/or in surroundings of a known navigation destination.

11. Free parking space assistance system (10) according to Claim 10, **characterized in that** the free parking space assistance system (10) comprises at least one vehicle having a display device, wherein information about the provided parking space is represented visually on a display device of the road user.

12. Free parking space assistance system (10) according to Claim 10 or 11, comprising at least one vehicle (3) having a surroundings detecting device (11) and a communication unit (13), wherein the surroundings detecting device (11) is configured to ascertain free parking spaces in the surroundings of the vehicle (3), and wherein the communication unit (13) is configured to transmit ascertained information about the free parking spaces to the cloud computing system (1).

13. Free parking space assistance system (10) according to any of Claims 10 to 12, comprising a, more particularly mobile, unit (23) assigned to a road user (3, 5) and configured to retrieve information about the free parking spaces from the cloud computing system (1) and to provide it to the road user (3, 5).

## Revendications

1. Procédé de communication de places de stationnement, dans lequel des usagers de la route (3, 5, 50) obtiennent des informations sur les places de stationnement libres et transmettent les informations à un système informatique en nuage (1), dans lequel le système informatique en nuage (1) enregistre de manière interrogeable les informations sur les places de stationnement libres dans une carte de stationnement, dans lequel le système informatique en nuage (1) obtient et alloue des places de stationnement libres (40) dans un environnement local de l'usager de la route (3, 5, 15, 17) et/ou dans un environnement d'une destination de navigation connue,
**caractérisé en ce qu'**une place de stationnement est affichée sous la forme d'une aire de stationnement en utilisant les informations sur les places de stationnement libres (40), dans lequel, lorsqu'aucun marquage de places de stationnement n'est présent sur la chaussée, des lignes de délimitation virtuelles (42) sont générées, dans lequel il est indiqué au système informatique en nuage (1), sur la base de la position GPS du véhicule (50), qu'une aire déterminée (40) est libérée en tant qu'espace de stationnement public et n'est actuellement pas occupée, et dans lequel des informations comprenant les lignes de délimitation virtuelles (42, 44) sur la place de stationnement libre sont représentées visuellement sur un appareil d'affichage de l'usager de la route, dans lequel l'appareil d'affichage est un afficheur tête haute qui est apte à superposer des objets virtuels (42, 44) dans le champ de vision (60) de l'usager de la route.

2. Procédé selon la revendication 1, **caractérisé en ce que** les informations sur la place de stationnement allouée comprennent en outre un symbole de place de stationnement virtuelle (44).

3. Procédé selon la revendication 1 ou 2, **caractérisé en ce que** les usagers de la route (3) sont des véhicules équipés de dispositifs de détection d'environnement (11) qui, lors d'un passage devant des places de stationnement libres, obtiennent les places de stationnement libres, en particulier indépendamment de la présence réelle de marquages de places de stationnement.

4. Procédé selon l'une des revendications précédentes, **caractérisé en ce que** le lieu et/ou la taille et/ou d'autres méta-informations de places de stationnement sont obtenus.

5. Procédé selon l'une des revendications précédentes, **caractérisé en ce que** le lieu de la place de stationnement libre est obtenu par l'intermédiaire d'un système de navigation (19).

6. Procédé selon l'une des revendications précédentes, **caractérisé en ce que**, lors d'une demande, des places de stationnement libres sont indiquées à un usager de la route (3, 5, 15, 17).

7. Procédé selon l'une des revendications précédentes, **caractérisé en ce que** le système informatique en nuage (1) obtient et alloue des places de stationnement libres appropriées sur la base de dimensions du véhicule de l'usager de la route (3, 5, 15, 17), sur la base de souhaits de l'usager de la route (3, 5, 15, 17) et/ou de caractéristiques de la place de stationnement.

8. Procédé selon l'une des revendications précédentes, **caractérisé en ce que** le système informatique en nuage (1) alloue ou bloque des aires prédéterminées en tant qu'aires de stationnement en fonction de conditions actuelles.

9. Programme informatique pour la mise en œuvre de l'un des procédés selon l'une des revendications 1 à 8, dans lequel le programme informatique est exécuté sur un dispositif informatique programmable.

10. Système d'aide à l'obtention de places de stationnement libres (10) destiné à mettre en œuvre un procédé selon l'une des revendications 1 à 8, comprenant un système informatique en nuage (1) qui est conçu pour recevoir des informations sur des places de stationnement libres et les enregistrer dans une carte de stationnement, et qui est conçu pour fournir à la demande les informations sur les places de stationnement libres, dans lequel le système informatique en nuage (1) obtient et alloue des places de stationnement libres dans un environnement local de l'usager de la route (3, 5, 15, 17) et/ou dans un environnement d'une destination de navigation connue.

11. Système d'assistance à l'obtention de places de stationnement libres (10) selon la revendication 10, **caractérisé en ce que** le système d'assistance à l'obtention de places de stationnement libres (10) comprend au moins un véhicule équipé d'un appareil d'affichage, dans lequel des informations concernant la place de stationnement allouée sont représentées visuellement sur un appareil d'affichage de l'usager de la route.

12. Système d'assistance à l'obtention de places de stationnement libres (10) selon la revendication 10 ou 11, comprenant au moins un véhicule (3) équipé d'un dispositif de détection d'environnement (11) et d'une unité de communication (13), dans lequel le dispositif de détection d'environnement (11) est conçu pour obtenir des places de stationnement libres dans l'environnement du véhicule (3) et dans lequel l'unité de communication (13) est conçue pour transmettre au système informatique en nuage (1) des informations obtenues sur les places de stationnement libres.

13. Système d'assistance à l'obtention de places de stationnement libres (10) selon l'une des revendications 10 à 12, comprenant une unité (23), en particulier mobile, associée à un usager de la route (3, 5), qui est conçue pour demander des informations sur les places de stationnement libres au système informatique en nuage (1) et les fournir à l'usager de la route (3, 5).
